# FASCICULE DE BREVET EUROPEEN

(11) **EP 0 454 036 B1**
(45) Date de publication et mention de la délivrance du brevet: **01.02.1995**
(21) Numéro de dépôt: 91106457.4
(22) Date de dépôt: 22.04.1991
(51) Int. Cl.: H04L 1/22

(54) **Procédé et dispositif de retour à une liaison normale après utilisation d'une liaison de secours dans un système de transmission de données**
Verfahren und Anordnung für die Rückkehr zu einer normalen Verbindung nach Benutzung einer Hilfsverbindung in einem Datenübertragungssystem
Method and device for going back to a normal connection after the use of a help connection in a data transmission system

(30) Priorité: 23.04.1990 FR 9005130
(43) Date de publication de la demande: 30.10.1991
(73) Titulaire: ALCATEL CIT, 75008 Paris (FR)
(72) Inventeur: Tourbah, Abdallah, F-91380 Chilly Mazarin (FR); Ruminy, Patrick, F-91700 Villiers sur Orge (FR)
(74) Mandataire: Weinmiller, Jürgen

(56) Documents cités:
- EP-A- 0 032 328
- EP-A- 0 332 792
- IBM TECHNICAL DISCLOSURE BULLETIN, vol. 28, no. 8, janvier 1986, pages 3250-3251, New York, US; "Adapter for connecting a multipoint modem network to the public switched network"
- PATENT ABSTRACTS OF JAPAN, vol. 9, no. 277 (E-355)[2000], 6 novembre 1985;& JP-A-60 119 147 (FUJITSU) 26-06-1985
- PATENT ABSTRACTS OF JAPAN, vol. 7, no. 170 (E-189)[1315], 27 juillet 1983;& JP-A-58 77 336 (TOKYO SHIBAURA DENKI) 10-05-1983

## Description

La présente invention concerne la transmission de données.

Elle concerne plus particulièrement les systèmes de transmission de données comportant, pour la transmission de données entre deux équipements d'extrémité, une liaison dite normale sur laquelle s'effectue en temps normal la transmission de données, et une liaison dite de secours, utilisée en cas de mauvais fonctionnement de la liaison normale.

En pratique, la liaison normale est le plus souvent constituée par une liaison dite spécialisée, et la liaison de secours par une liaison empruntant le réseau téléphonique commuté. Dans ce qui suit, on utilisera indifféremment les uns ou les autres de ces termes.

Divers procédés assurant, dans de tels systèmes de transmission de données, le passage de la liaison normale à la liaison de secours, après détection d'un mauvais fonctionnement de la liaison normale, sont connus.Le document EP-A- 0 332 792 décrit ainsi un procédé de passage d'une liaison normale à une liaison de secours, applicable à un système de transmission de données comportant des équipements d'extrémité reliés entre eux suivant une configuration point-à-multipoint.

La présente invention a pour objet le retour à la liaison normale après utilisation de la liaison de secours.

On connaît certains procédés pour effectuer un tel retour, consistant par exemple à effectuer régulièrement des tentatives de transmission sur la liaison normale avec arrêt de transmission sur la liaison de secours aux instants correspondants, ou encore à maintenir la transmission sur la liaison de secours, tout en vérifiant simultanément la continuité de la liaison normale au moyen d'une fréquence de signalisation particulière émise sur celle-ci.

Ces procédés ont pour inconvénient soit de perturber la transmission de données au moment de cette opération, soit de ne pas vérifier la continuité de la liaison normale dans les conditions réelles d'utilisation de celle-ci. Ils ont en outre pour inconvénient d'autoriser ce retour alors que la qualité de la transmission sur la liaison normale n'est peut-être pas encore redevenue correcte.

La présente invention a pour objet un procédé permettant d'éviter ces inconvénients.

La présente invention a pour objet un procédé de retour à une liaison normale après utilisation d'une liaison de secours dans un système de transmission de données comportant deux telles liaisons entre deux équipements d'extrémité, la seconde de ces liaisons étant utilisée en cas de mauvais fonctionnement de la première, ce procédé comportant, parallèlement à la transmission sur la liaison de secours, une vérification préalable de la continuité de la liaison normale, et étant essentiellement caractérisé en ce que cette vérification préalable comporte une émission simultanée d'un signal de données par l'un des équipements d'extrémité, dit équipement d'extrémité initiateur de la procédure de vérification de continuité, sur la liaison normale et sur la liaison de secours, et une détection par l'autre équipement d'extrémité d'une éventuelle présence d'énergie sur la liaison normale, et ceci pour chaque support de transmission de la liaison normale si celle-ci comporte des supports distincts pour chaque sens de transmission.

Suivant une autre caractéristique de l'invention, ce procédé comporte, une fois établie la continuité de la liaison normale, par détection de présence d'énergie sur cette liaison, au cours d'une première étape, une deuxième étape de vérification de la bonne qualité de la transmission sur cette liaison, sans libérer la liaison de secours, et à l'initiative de l'un des équipements d'extrémité, dit équipement d'extrémité initiateur de la procédure de vérification de qualité.

Suivant une autre caractéristique de l'invention, ce procédé comporte, en cas de non vérification de bonne qualité de la transmission sur la liaison normale au cours de la deuxième étape, un retour à la première étape, avec transmission sur la liaison de secours non libérée, émission simultanée d'un signal de données par l'équipement d'extrémité initiateur de la procédure de vérification de continuité, sur la liaison normale et sur la liaison de secours, et détection par l'autre équipement d'extrémité d'une éventuelle présence d'énergie sur la liaison normale, seulement à l'expiration d'un délai de temporisation.

La présente invention a également pour objet un système pour la mise en oeuvre de ce procédé, selon les caractéristique de la revendication 11.

D'autres objets et caractéristiques de la présente invention apparaîtront à la lecture de la description suivante d'exemples de réalisation, ladite description étant faite plus particulièrement dans le cas où la liaison normale est une liaison spécialisée et la liaison de secours une liaison par le réseau téléphonique commuté, et où les équipements d'extrémité comportant les éléments permettant de mettre en oeuvre la procédure de retour suivant l'invention sont constitués par des modems, ladite description étant faite en relation avec les dessins ci-annexés dans lesquels :
- Les figures 1 à 8 sont des schémas illustrant les différentes étapes d'un procédé suivant l'invention, dans le cas où la liaison spécialisée ne comporte pas de supports distincts pour chaque sens de transmission;
- la figure 9 est un schéma d'un dispositif pour la mise en oeuvre du procédé illustré sur les figures 1 à 8;
- les figures 10A et 10B sont des diagrammes illustrant la réalisation des différentes étapes du procédé illustré sur les figures 1 à 8, par un dispositif suivant la figure 9, respectivement dans l'un des modems, dit modem en mode appel, et dans l'autre modem, dit modem en mode réponse;
- les figures 11 à 19 sont des schémas illustrant les différentes étapes du procédé suivant l'invention, dans le cas où la liaison spécialisée comporte des supports distincts pour chaque sens de transmission;
- la figure 20 est un schéma d'un dispositif pour la mise en oeuvre du procédé illustré sur les figures 11 à 19;
- les figures 21A et 21B sont des diagrammes illustrant la réalisation des différentes étapes du procédé illustré sur les figures 11 à 19, par un dispositif suivant la figure 20, respectivement dans un modem dit modem en mode appel, et dans l'autre modem, dit modem en mode réponse.

Quel que soit le mode de réalisation de l'invention, on notera en outre que le signal de données émis simultanément sur la liaison normale et sur la liaison de secours par l'un des équipements d'extrémité au cours de l'étape de vérification préalable de la continuité de la liaison normale, peut être indifféremment identique ou différent pour ces deux liaisons.

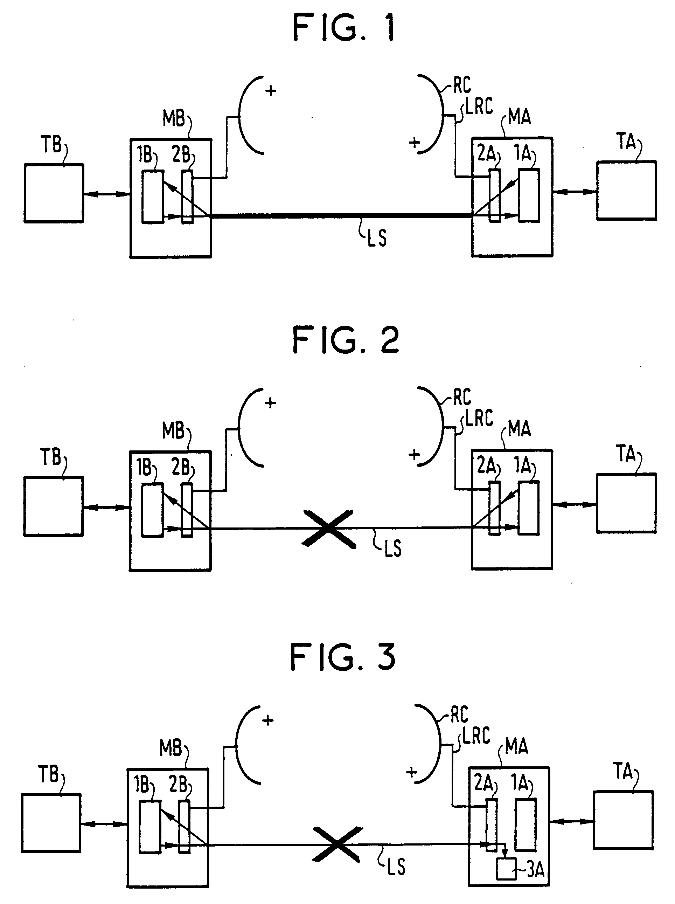

Sur les figures 1 à 8 est représenté schématiquement un système de transmission de données comportant, pour la transmission de données entre deux terminaux de données, respectivement TA et TB, associés chacun à un modem, respectivement MA et MB, une liaison spécialisée LS sur laquelle s'effectue en temps normal la transmission, et une liaison LRC par le réseau téléphonique commuté RC, sur laquelle est reportée la transmission en cas de dégradation ou de rupture de la transmission sur la liaison spécialisée LS.

Sur les figures 1 à 8 on a également représenté, pour chacun des modems MA et MB, son dispositif de traitement de données, respectivement 1A et 1B, et un circuit d'aiguillage et d'interface avec les liaisons LS et LRC, respectivement 2A et 2B, assurant la séparation des sens émission et réception pour chacune des liaisons, et, suivant les différentes étapes du procédé suivant l'invention, la connexion des accès émission et réception du dispositif de traitement de données aux accès émission et réception ainsi dissociés de la liaison LS et/ou de la liaison LRC.

Les modems MA et MB nécessitent, pour la description du procédé suivant l'invention, d'être arbitrairement différenciés.

A l'un d'eux, dit modem en mode appel, constitué par exemple par le modem MA, est attribuée l'initiative de détournement du trafic de la liaison spécialisée LS vers la liaison de secours LRC, en particulier de l'appel de l'autre modem, MB, dit modem en mode téléphonique commuté.

Le fonctionnement normal avec transmission sur la liaison spécialisée LS est rappelé sur la figure 1, les circuits d'interface et d'aiguillage 2A et 2B assurant alors l'aiguillage des signaux émis et reçus par le dispositif de traitement de données de chacun de ces modems vers la liaison LS, qui, étant alors utilisée, est symbolisée par un trait gras.

Une dégradation ou une interruption de la transmission intervenant sur la liaison LS est symbolisée sur la figure 2. Les modems constatent alors, suivant un procédé classique, ce mauvais fonctionnement et, en vue de déterminer s'il s'agit d'une dégradation ou d'une interruption (ce qui sera utilisé comme on le verra par la suite pour mettre en oeuvre la procédure de retour suivant l'invention). L'un d'eux, avantageusement le modem en mode appel, détecte, ainsi qu'illustré sur la figure 3, au moyen d'un détecteur d'énergie 3A, une éventuelle présence d'énergie sur son accès réception à la liaison LS, tout en arrêtant son émission sur cette liaison, afin de ne pas détecter de présence d'énergie due à un signal écho. Il conclut à une dégradation dans le cas d'une telle présence, ou à une interruption dans le cas contraire.

Le modem en mode appel, MA, tente alors une connexion avec le modem en mode réponse, MB, par le réseau téléphonique commuté RC.

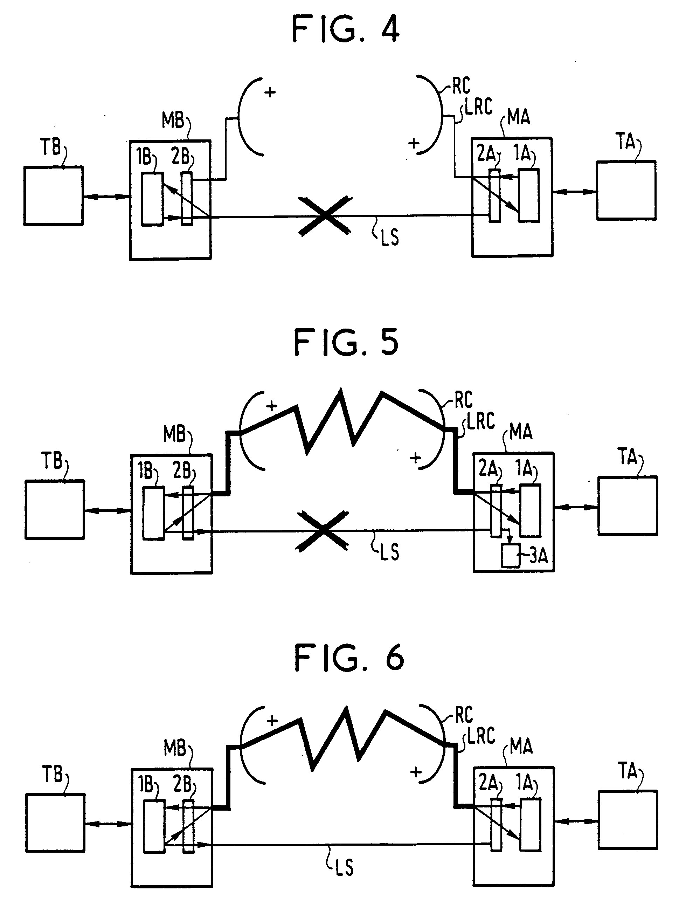

Une phase classique d'établissement de communication par le réseau téléphonique commuté RC a alors lieu. Cette phase comporte une numérotation par le modem en mode appel MA, au cours de laquelle les signaux émis et reçus par le dispositif de traitement de données de ce modem sont, comme illustré sur la figure 4, aiguillés vers la liaison LRC, le numéro émis étant celui du modem en mode réponse MB. Ce dernier détecte un appel en provenance du réseau téléphonique commuté RC et, ayant comme le modem en mode appel constaté un mauvais fonctionnement de la liaion LS (mais sans qu'il lui ait été nécessaire de déterminer s'il s'agit d'une dégradation de la qualité de la transmission ou d'une interruption de la transmission) connecte, sur cette détection, les accès émission et réception de son dispositif de traitement de données à ses accès émission et réception à la liaison LRC.

La transmission peut alors s'effectuer sur la liaison LRC, comme illustré à la figure 5, où la liaison LRC est symbolisée par un trait gras, cette transmission débutant, pour chacun des modems, par une procédure d'établissement d'une communication avec l'autre modem.

L'un des modems, dit modem initiateur de la procédure de vérification de continuité de la liaison LS, avantageusement le modem en mode réponse, émet alors un signal de données simultanément sur la liaison LRC et sur la liaison LS, et l'autre modem, en l'occurence le modem en mode appel, détecte une éventuelle présence d'énergie sur son accès réception à la liaison LS, au moyen du détecteur d'énergie 3A, ainsi qu'illustré sur la figure 5.

Dans le cas où le mauvais fonctionnement initialement constaté sur la liaison LS a été détecté comme étant dû à une interruption de la transmission sur cette liaison, cette détection d'une éventuelle présence d'énergie est effectuée immédiatement.

Dans le cas où le mauvais fonctionnement initialement constaté sur la liaison LS a été détecté comme étant du à une dégradation de la qualité de la transmission sur cette liaison, cette détection d'une éventuelle présence d'énergie n'est effectuée qu'à l'expiration d'un délai de temporisation de 30 minutes par exemple.

Dans les deux cas, c'est la détection d'une présence d'énergie, telle que symbolisée sur la figure 6, qui conditionne le passage aux étapes suivantes.

Ces étapes suivantes sont maintenant décrites.

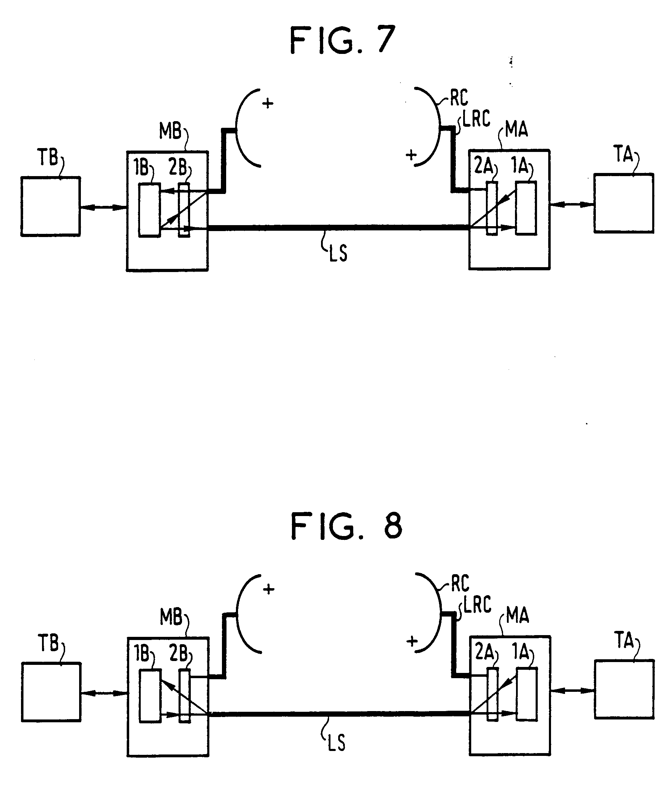

Sur la figure 7, avec le modem en mode réponse MB toujours connecté comme sur la figure 5, et notamment avec l'accès réception de son dispositif de traitement de données toujours connecté à l'accès en réception à la liaison LRC, le modem en mode appel MA, dit modem initiateur de la procédure de vérification de qualité de la transmission sur la liaison LS, tente une transmission d'un signal de données sur cette liaison, c'est-à-dire se met en position de transmission d'un signal de données par cette liaison et entame une procédure d'établissement de communication sur la liaison LS, sans libérer la liaison LRC, ce qui est symbolisé sur la figure 7 par un trait gras pour les deux liaisons et par le fait que les accès émission et réception du dispositif de traitement de données du modem en mode appel sont maintenant connectés aux accès en émission et en réception de ce modem à la liaison LS.

Le modem en mode réponse, constatant alors une disparition de son signal en réception, tente à son tour une transmission sur la liaison LS, sans pour autant libérer la liaison de secours LRC, ce qui est également symbolisé sur la figure 8 par un trait gras pour ces deux liaisons et par le fait que les accès émission et réception des dispositifs de traitement de données des deux modems sont maintenant respectivement connectés à leurs accès en émission et en réception à la liaison spécialisée.

Si la qualité de la transmission est jugée satisfaisante à l'issue de la procédure d'établissement de communication sur la liaison LS, chacun de ces modems libère ensuite la liaison LRC, et la situation redevient alors la situation initiale schématisée sur la figure 1.

Si la qualité de la transmission est jugée non satisfaisante, les modems se remettent, comme illustré sur la figure 5, en position de transmission de données par la liaison de secours LRC sur laquelle s'effectue alors la transmission, après mise en oeuvre de la procédure d'établissement de communication sur cette liaison, le modem en mode réponse continuant cependant à émettre sur la liaison LS de sorte que le modem en mode appel puisse détecter une présence d'énergie sur son accès réception à la liaison LS, cette détection de présence d'énergie n'étant toutefois effectuée qu'à l'expiration d'un délai de temporisation de 30 minutes par exemple, après quoi la situation redevient celle schématisée sur la figure 7 dans le cas d'une présence d'énergie, ou reste celle schématisée sur la figure 5 dans le cas contraire, la détection d'une éventuelle présence d'énergie, alors effectuée, l'étant immédiatement.

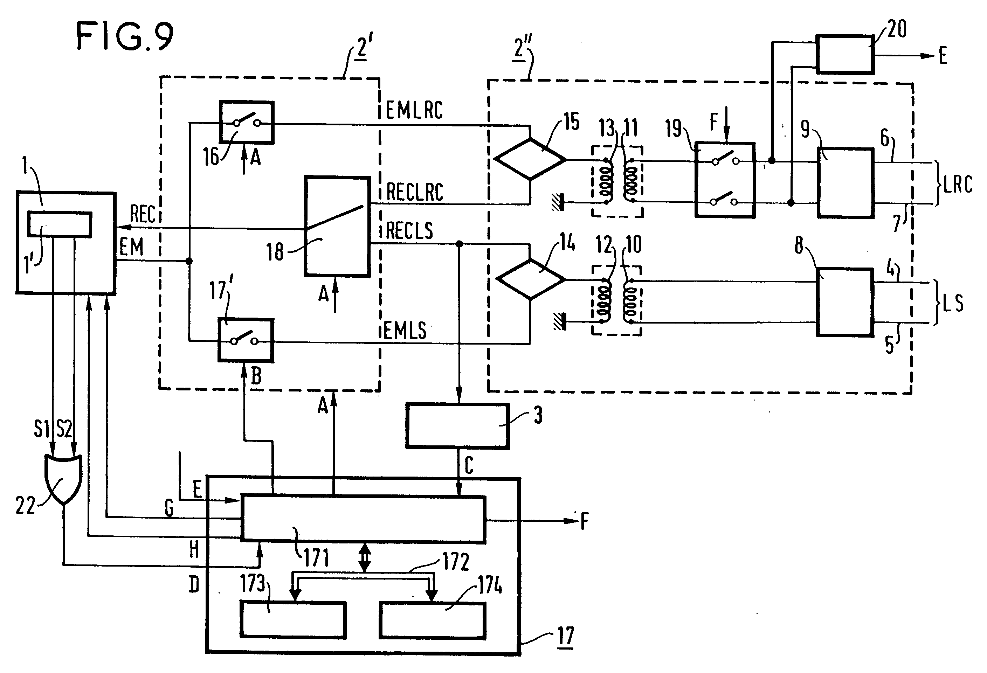

Un dispositif pour la mise en oeuvre du procédé ainsi décrit est représenté sur la figure 9. Ce dispositif est identique pour le modem en mode appel et pour le modem en mode réponse.

On retrouve sur cette figure le dispositif de traitement de données 1, le circuit d'interface et d'aiguillage 2, se décomposant en un circuit d'aiguillage 2′et en un circuit d'interface 2˝, ainsi que le détecteur d'énergie 3.

Les accès en émission et en réception au dispositif de traitement de données sont référencés respectivement EM et REC.

Dans le cas considéré pour ce premier mode de réalisation de l'invention, chacune des liaisons LS et LRC comporte deux fils, respectivement, 4, 5, et 6, 7, non spécialisés en émission ou en réception.

Le circuit d'interface 2˝ comporte alors, pour chacune des liaisons LS et LRC, un circuit de protection, respectivement 8, 9, et un transformateur muni d'un premier enroulement, respectivement 10, 11, connecté aux fils de la liaison correspondante et d'un deuxième enroulement, respectivement 12, 13 dont une première extrémité est mise à la masse et dont une deuxième extrémité est reliée à l'entrée d'un circuit duplexeur, respectivement 14, 15, permettant de dissocier les accès en émission et en réception à ces liaisons, référencés respectivement EMLS et RECLS pour la liaison LS, EMLRC et RECLRC pour la liaison LRC.

Le circuit d'aiguillage 2′ permet de connecter les accès EM et REC respectivement aux accès EMLS et RECLS, et/ou EMLRC et RECLRC, suivant le procédé décrit ci-dessus. Il comporte pour cela un interrupteur 16 connecté en entrée à l'accès émission EM, en sortie à l'accès EMLRC, et commandé par un signal logique de commande référencé A issu d'un séquenceur 17 dont la séquence de fonctionnement sera décrite ultérieurement .

Le circuit d'aiguillage 2′ comporte également un interrupteur 17′ connecté d'une part à l'accès EM, d'autre part à l'accès EMLS, et commandé par un signal logique référencé B issu du séquenceur 17.

Le circuit d'aiguillage 2′ comporte également un multiplexeur 18 ayant deux entrées de données connectées respectivement aux accès RECLS et RECLRC, une sortie constituant l'accès REC, et une entrée de commande sur laquelle est appliqué le signal de commande A.

Entre l'enroulement 11 et le circuit de protection 9 est par ailleurs disposé un interrupteur double 19 commandé par un signal logique référencé F issu du séquenceur 17 et ayant pour fonction d'établir ou de libérer la liaison par le réseau téléphonique commuté, suivant le procédé décrit ci-dessus.

Le signal présent sur la liaison LRC entre l'interrupteur 19 et le circuit de protection 9 alimente un détecteur d'appel 20 fournissant au séquenceur 17 un signal logique référencé E.

Le signal disponible sur l'accès RECLS alimente en outre le détecteur d'énergie 3 fournissant au séquenceur 17 un signal logique référencé C.

Le séquenceur 17 reçoit également un signal logique D indiquant si la réception de données par le modem considéré est satisfaisante ou non, et obtenu, par exemple, ainsi qu'illustré sur la figure 9, en sortie d'une porte 22 effectuant un "ou" logique entre deux signaux S1 et S2 délivrés par un circuit 1′ d'analyse de signaux reçus (inclus dans le dispositif de traitement de données 1) et indiquant l'un une dégradation de la qualité des signaux reçus, ou bien l'absence d'une telle dégradation, et l'autre une impossibilité de synchronisation ou de resynchronisation, ou bien une synchronisation ou une resynchronisation effective, dans le cas d'une procédure de transmission basée sur un échange entre les deux terminaux de données, l'un d'entre eux ayant l'initiative des échanges sur la liaison utilisée et étant ici associé au modem en mode appel.

La dégradation de la qualité des signaux est détectée par rapport à des signaux de référence prédéterminés attendus en cas de non dégradation, que l'on représente généralement par une constellation de points dans le plan de Fresnel dans le cas d'un modem effectuant une combinaison d'une modulation de phase et d'une modulation d'amplitude.

Un tel dispositif d'analyse de signaux reçus est bien connu de l'homme du métier, étant également utilisé pour commander le basculement de la liaison normale vers la liaison de secours en cas de réception non satisfaisante de la transmission sur la liaison normale; il ne sera donc pas redécrit ici.

La réalisation du détecteur d'énergie 3 et du détecteur d'appel 20 ne nécessite pas non plus de description détaillée, de tels circuits étant bien connus de l'homme du métier.

Le séquenceur 17 fournit par ailleurs au dispositif de traitement de données un signal G de commande de démarrage de la procédure d'établissement d'une communication avec l'autre modem et, dans le cas du modem en mode appel seulement, un signal H de commande d'appel de l'autre modem en vue de l'établissement d'une liaison par le réseau téléphonique commuté.

L'émission de la numérotation par le modem en mode appel se fait par exemple à partir du dispositif de traitement de données 1 dans le cas d'une numérotation en mode multifréquences, ce dispositif ayant en mémoire le numéro d'appel du modem en mode réponse.

Le mode de réalisation du séquenceur 17, illustré à titre d'exemple sur la figure 9, comporte un microcontrôleur 171 relié par des bus d'adresses, de données, et de contrôle, référencés globalement 172, à une mémoire vive 173 permettant en particulier de stocker de manière provisoire l'état des signaux A, B, C, D, E, F, G, H, et à une mémoire morte 174 contenant la séquence de fonctionnement du séquenceur 17, sous forme d'un programme d'instructions du microcontrôleur 171.

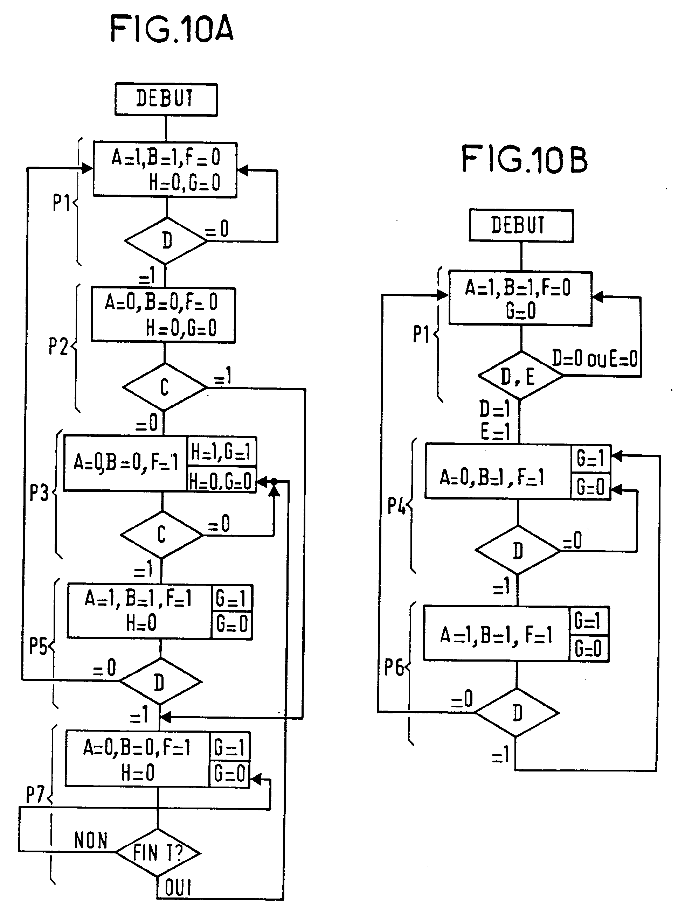

Pour la description de la séquence de fonctionnement générée par le séquenceur, faite en regard des figures 10A et 10B, respectivement pour le modem en mode appel et pour le modem en mode réponse, on fera, à titre d'exemple, l'hypothèse que les signaux logiques C, D, E, ont la valeur binaire "1" respectivement dans les cas suivants :
- présence d'énergie détectée par le détecteur d'énergie 3 (C=1)
- réception de données non satisfaisante (D=1)
- détection d'un d'appel (E=1)

et que les signaux logiques A, B et F commandent par leur valeur binaire "1" les états suivants :
- interrupteur 16 ouvert et multiplexeur 18 connectant l'accès REC à l'accès RECLS (A=1)
- interrupteur 17′ fermé (B=1)
- interrupteur 19 fermé (F= 1)

On fera par ailleurs, à titre d'exemple, l'hypothèse que les signaux G et H indiquent, par une transition de l'état "0" à l'état "1" suivie d'une transition de l'état "1" à l'état "0", respectivement une commande de démarrage de la procédure d'établissement d'une communication avec l'autre modem, et une commande d'appel de l'autre modem (le signal H n'étant utilisé que dans le modem en mode appel).

On a repéré par P1 sur les figures 10A et 10 B la phase initiale dans laquelle se trouve chacun des modems lors de la transmission en fonctionnement normal sur la liaison LS, caractérisée par les états suivants des signaux logiques de commande : A= 1, B=1, F=0, G=0 aussi bien pour le modem en mode appel que pour le modem en mode réponse, et de plus par l'état H=0 pour le modem en mode appel. Cette phase P1 comporte un test permanent de l'état du signal D, ce test commandant le maintien à cette phase initiale dans le cas d'un niveau "0" de ce signal.

La deuxième phase , P2, qui concerne le modem en mode appel, se produit sur détection du signal de commande D au niveau"1" et est caractérisé par les états A=0, B=0, F=0, G=0, H=0 pour le modem en mode appel. Elle correspond à l'arrêt de l'émission par ce modem et à la détection par le détecteur d'énergie 3 de ce modem, d'une éventuelle présence d'énergie sur la liaison spécialisée.

Dans le cas de détection d'absence d'energie, indiquée par un niveau "0" du signal C pour le modem en mode appel, et correspondant à une interruption de la liaison spécialisée, intervient dans ce modem le passage de la phase P2 à une phase P3 caractérisée par les états A=0, B=0, F=1 ainsi que par un passage au niveau "1", suivi d'un retour au niveau "0", des signaux G et H, puis dans le modem en mode réponse, sur détection d'un niveau "1" du signal de commande E de ce modem, provoquée par la numérotation émise par le modem en mode appel au cours de la phase P3, le passage de la phase P1 à une phase P4 caractérisée par les états A=0, B=1, F=1, ainsi que par un passage au niveau "1", suivi d'un retour au niveau "0", du signal G, au cours desquelles ces deux modems transmettent par la liaison LRC, le modem en mode réponse émettant par ailleurs son signal de données également sur la liaison LS.

Sur détection d'énergie, au cours de la phase P3, dans le modem en mode appel, indiquée par un niveau "1" du signal C pour ce modem, intervient ensuite, pour ce modem, le passage de la phase P3 à une phase P5 caractérisée par les états suivants : A = 1, B=1, F=1, H=0 ainsi que par un passage au niveau "1", suivi d'un retour au niveau "0", du signal G, au cours de laquelle le modem en mode appel tente une transmission sur la liaison spécialisée sans libérer la liaison LRC.

Sur détection de réception non satisfaisante par le modem en mode réponse, au cours de la phase P4 (et s'agissant en l'occurrence d'une absence totale de signaux reçus puisque le modem en mode appel émet alors sur la liaison spécialisée tandis que le modem en mode réponse a son accès REC connecté à l'accès RECLRC), signalée par un passage au niveau "1" du signal D pour le modem en mode réponse, se produit alors pour ce modem le passage de la phase P4 à une phase P6 caractérisée par les états suivants, A=1, B=1, F=1, ainsi que par un passage au niveau "1", suivi d'un retour au niveau "0", du signal G, et au cours de laquelle le modem en mode réponse tente à son tour une transmission sur la liaison spécialisée sans libérer la liaison LRC.

Dans le cas d'une détection d'un niveau "0" du signal D au cours de la phase P5 pour le modem en mode appel, ou au cours de la phase P6 pour le modem en mode réponse, chacun des modems retourne ensuite à la phase initiale P1 de transmission sur la liaison spécialisée.

Dans le cas d'un niveau "1" de son signal D, détecté au cours de la phase P6, le modem en mode réponse retourne à l'état A=0, B=1, F=1, G=1 de la phase P4 tandis que sur détection d'un niveau "1" de son signal D, au cours de la phase P5, le modem en mode appel passe à une phase P7 caractérisée par les mêmes états A=0, B=0, F=1, H=0, G=1, puis A=0, B=0, F=1, H=0, G=0 que la phase P3, à l'état A=0, B=0, F=1, H=0, G=0 de laquelle (la procédure d'établissement de communication avec l'autre modem par la liaison LRC ayant déjà été réalisée) il retourne ensuite automatiquement après l'écoulement d'une durée déterminée T égale par exemple à 30 minutes.

En cas de non écoulement de la durée T, le modem en mode appel reste à l'état A=0, B=0, F=1, H=0, G=0 de la phase P7.

Par ailleurs, sur détection d'un niveau "1" du signal C dans le modem en mode appel lors de la phase P2, ce modem passe directement à la phase P7.

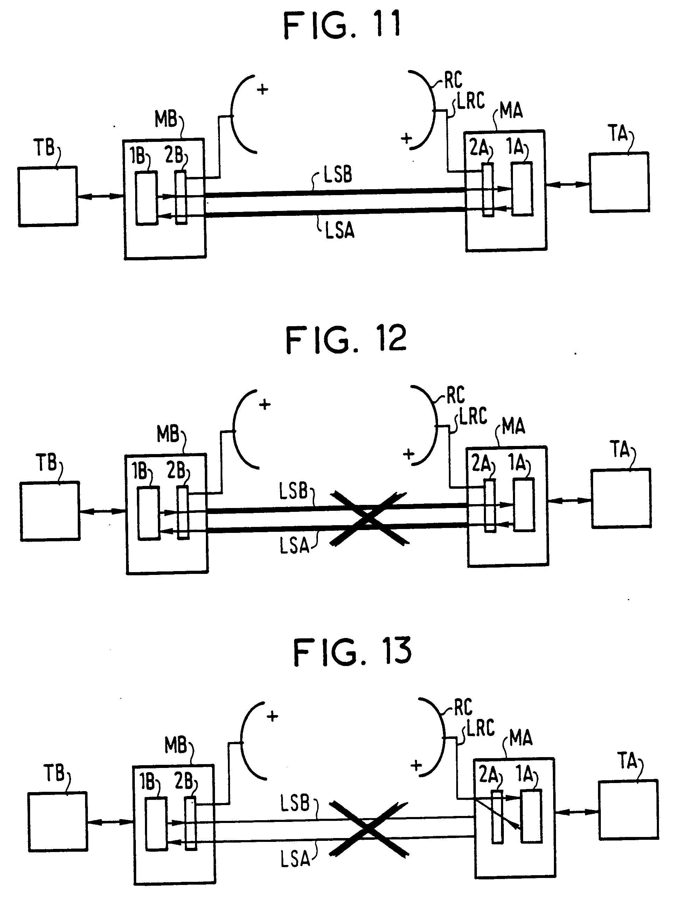

On décrit maintenant, en relation avec les figures 11 à 19, un procédé suivant un deuxième mode de réalisation de l'invention, applicable au cas où la liaison spécialisée comporte des supports de transmission distincts pour les sens émission et réception.

Sur ces figures on a repéré par les mêmes références les éléments qui sont identiques à ceux présentés précédemment. Par ailleurs on ne redécrira pas en détail les étapes de ce procédé lorsqu'elles sont similaires à celles décrites précédemment.

La liaison LS est maintenant remplacée par deux liaisons, LSA pour la transmission dans le sens modem en mode appel vers modem en mode réponse, et LSB pour la transmission dans le sens modem en mode réponse vers modem en mode appel.

La figure 11 est, à cette différence près, identique à la figure 1.

Une dégradation ou une rupture intervenant sur la liaison LS est symbolisée sur la figure 12. On notera que cette interruption ou cette dégradation peut affecter soit la liaison LSA soit la liaison LSB, soit ces deux liaisons simultanément.

La phase de numérotation par le modem en mode appel, similaire à celle illustrée précédemment sur la figure 4, est illustrée sur la figure 13.

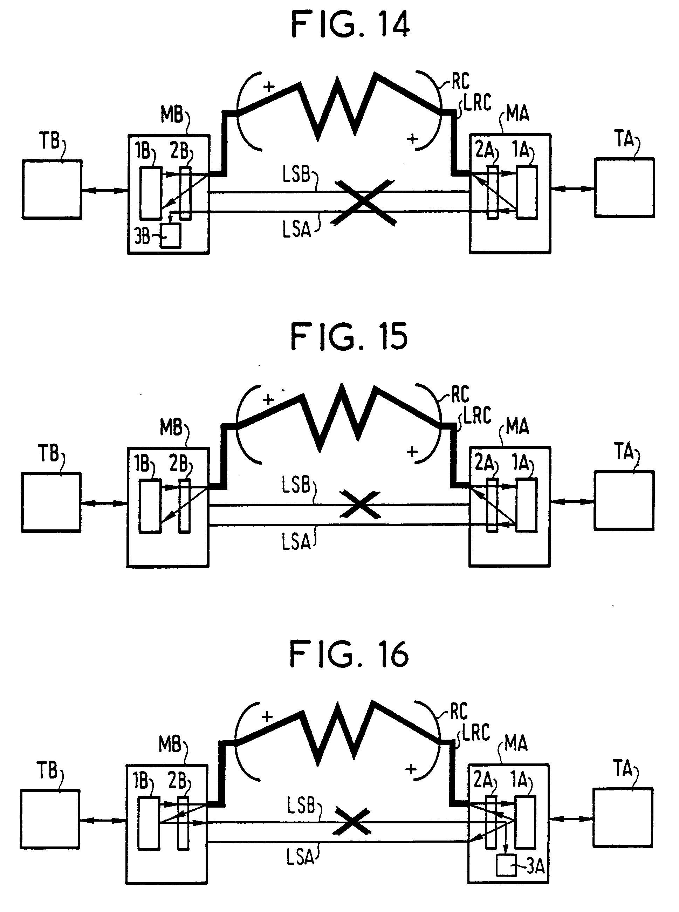

En ce qui concerne l'étape suivante de vérification de continuité de la liaison spécialisée, mise en oeuvre une fois que le modem en mode réponse a détecté l'appel et que les deux modems ont effectué la procédure d'étalissement d'une communication sur la liaison LRC, la figure 14 diffère de la figure 5 en ce que c'est maintenant le modem en mode appel qui émet simultanément un signal de données sur la liaison LRC et sur la liaison LS, c'est-à-dire en l'occurrence sur la liaison LSA, et le modem en mode réponse qui détecte une éventuelle présence d'énergie sur cette liaison, le cas d'une telle présence d'énergie sur la liaison LSA étant symbolisé sur la figure 15.

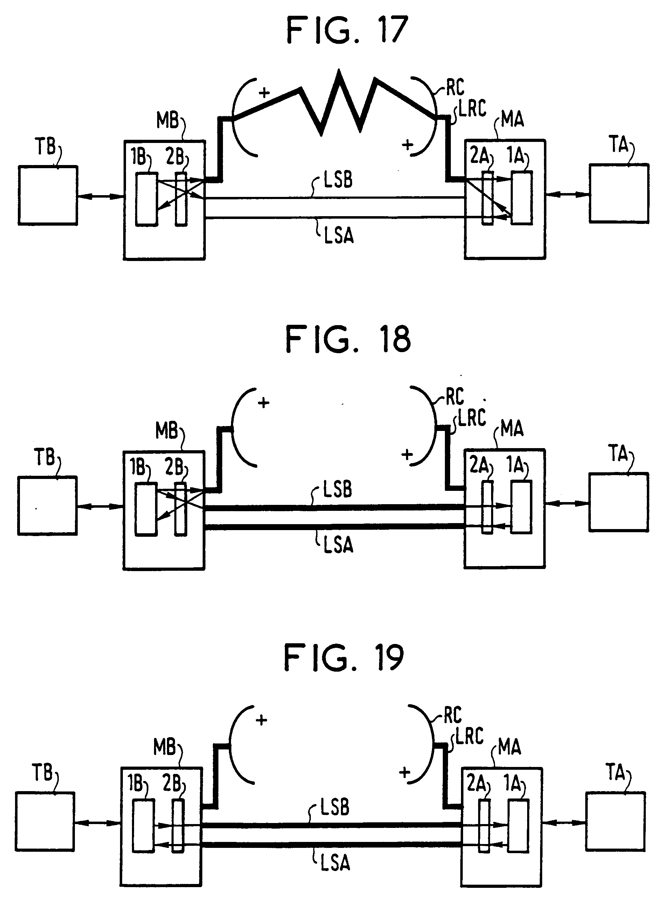

Par ailleurs est introduite une nouvelle étape, illustrée sur la figure 16, où, sur détection de la continuité de la liaison LSA par le modem en mode réponse, celui-ci émet alors un signal de données simultanément sur la liaison LRC et sur la liaison LS, en l'occurrence sur la liaison LSB, et le modem en mode appel détecte une éventuelle présence d'énergie sur celle-ci, une telle présence d'énergie sur la liaison LSB étant symbolisée sur la figure 17.

La figure 18 illustre l'étape suivante où, sur détection de la continuité de la liaison LSB, le modem en mode appel tente une transmission sur la liaison LS, c'est-à-dire se met en position de transmission d'un signal de données par cette liaison et entame une procédure d'établissement de communication sur cette liaison, sans pour autant libérer la liaison LRC.

Le modem en mode réponse ayant son accès réception toujours connecté à la liaison LRC, constate alors une disparition de son signal en réception, ce qui provoque le passage à l'étape suivante, illustrée sur la figure 19, où le modem en mode réponse tente à son tour une transmission sur la liaison LS.

Sur observation d'une réception satisfaisante par chacun des modems, ceux-ci libèrent la liaison LRC et retournent ainsi à l'état initial illustré sur la figure 11.

Sur l'observation inverse, la situation redevient celle décrite sur la figure 14, comportant une transmission sur la liaison LRC, non libérée, une émission simultanée d'un signal de données par le modem en mode appel sur la liaison LSA et une détection d'une éventuelle présence d'énergie reçue par le modem en mode réponse, la détection d'énergie par le modem en mode réponse n'étant toutefois ici effectuée qu'à l'expiration d'un délai de temporisation de 30 minutes par exemple.

Comme précédemment la situation redevient alors celle illustrée sur la figure 17 en cas de présence d'énergie, ou reste celle illustrée sur la figure 14 dans le cas contraire, la détection d'énergie mise en oeuvre dans le cadre de la figure 14 étant alors effectuée immédiatement.

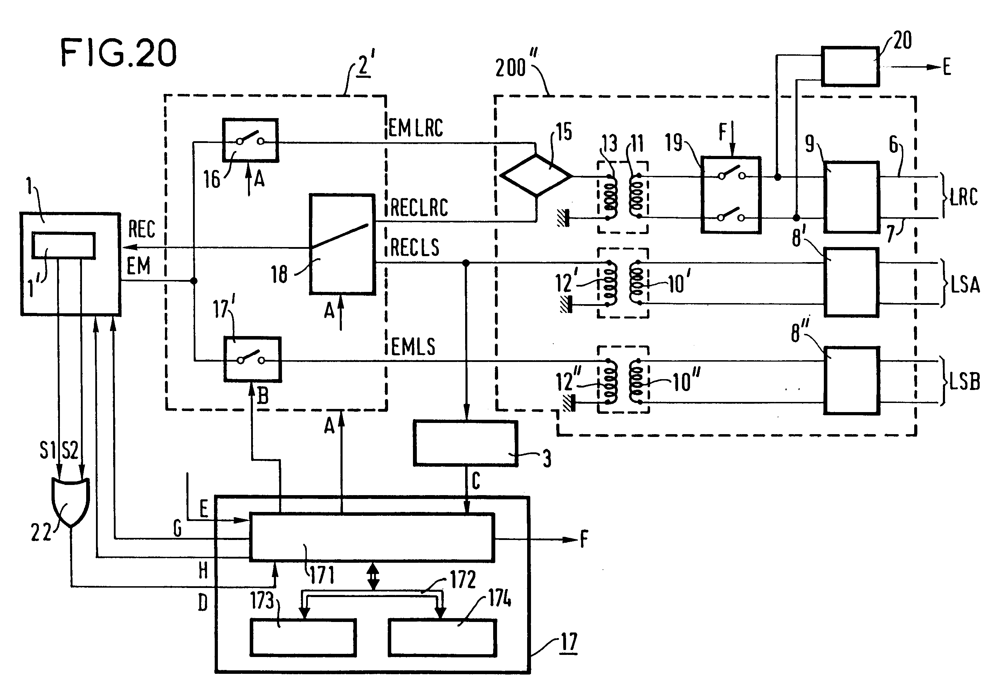

Un dispositif pour la mise en oeuvre du procédé illustré sur les figures 11 à 19 est représenté sur la figure 20.

Ce dispositif est identique pour le modem en mode appel et pour le modem en mode réponse. Sur cette figure on a repéré à l'aide des mêmes références les éléments qui sont identiques à ceux présentés sur la figure 9.

Ce dispositif est identique à celui de la figure 9 à l'exception, dans le circuit d'interface référencé ici 200˝, des éléments d'interface avec la liaison spécialisée, pour lesquels deux circuits de protection 8′ et 8˝ sont maintenant prévus, associés chacun à l'une des liaisons, respectivement LSA et LSB par exemple, ainsi que deux transformateurs associés également chacun à l'une des liaisons et dont les enroulements ont été repérés 10′ et 12′ pour celui associé à la liaison LSA et 10˝ et 12˝ pour celui associé à la liaison LSB, et un circuit duplexeur n'est maintenant plus nécessaire.

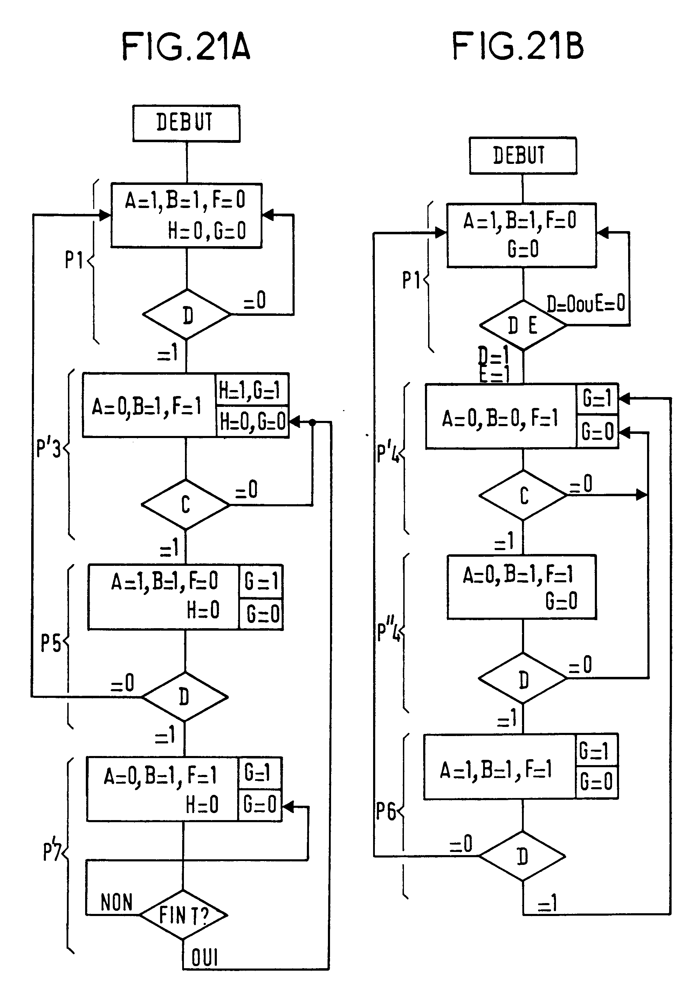

La séquence de fonctionnement du séquenceur 17 est indiquée sur les figures 21A et 21B, pour le modem en mode appel et pour le modem en mode réponse respectivement. Sur ces figures on a utilisé les mêmes références que sur les figures 10A et 10 B pour désigner des étapes analogues, qui ne seront alors pas redécrites de façon détaillée.

Cette séquence diffère de celle représentée sur les figures 10A et 10B en ce que, après l'étape P1, intervient pour le modem en mode appel une phase P′3 caractérisé par les états A=0, B=1, F=1, H=1, G=1, puis par les états A=0, B=1, F=1, H=0, G=0 dans laquelle ce modem met en oeuvre la procédure d'établissement d'une communication avec l'autre modem, émet un signal de données à la fois sur la liaison LRC et sur la liaison LS, et reçoit sur la liaison LRC.

Par ailleurs la phase P4 de transmission par le modem en mode réponse sur la liaison LRC est remplacée par une phase P′4 caractérisée par les états A=0, B=0, F=1, G=1, puis A=0, B=0, F=1, G=0 dans laquelle le modem en mode réponse met en oeuvre la procédure d'établissement d'une communication avec l'autre modem, transmet uniquement sur la liaison LRC, et détecte une éventuelle présence d'énergie sur la liaison LS.

Une détection d'énergie sur la liaison LS, par le modem en mode réponse, au cours de la phase P′4, c'est-à-dire une détection d'un niveau "1" du signal C de ce modem, entraîne une émission simultanée d'un signal de données par ce modem sur la liaison LRC et sur la liaison LS, avec réception sur la liaison LRC, cette étape étant repérée P''4 et étant caractérisée par les états A=O, B=1, F=1, G=0.

Une détection d'énergie sur la liaison LS, par le modem en mode appel, qui est alors dans la phase P′3, c'est-à-dire une détection d'un niveau "1" du signal C de ce modem, entraîne ensuite pour ce modem une tentative de retour à la liaison LS, sans libérer la liaison LRC, cette étape étant analogue à l'étape P5 de la figure 10A.

L'étape P6 suivante, au cours de laquelle le modem en mode réponse tente à son tour une transmission sur la liaison LS, sans libérer la liaison LRC, est également analogue à celle déjà décrite sur la figure 10B.

En cas de réception non satisfaisante par le modem en mode appel au cours de la phase P5, l'étape suivante pour ce modem, référence P′7, est identique à l'étape P′3 (de même que sur la figure 10A l'étape P7 était identique à l'étape P3).

Le passage de l'étape P′7 à l'état A=0, B=1, F=1, H=0, G=0 de l'étape P′3 se fait, de façon similaire à la figure 10A, à l'expiration d'un délai de temporisation T de 30 minutes par exemple, et la non expiration de ce délai de temporisation entraîne également le maintien à l'état A=0, B=1, F=1, H=0, G=0 de la phase P′7.

En cas de réception non satisfaisante par le modem en mode réponse au cours de la phase P6, ce modem retourne à l'état A=0, B=0, F=1, G=1, de la phase P′4.

En cas de réception satisfaisante au cours de la phase P5 pour le modem en mode appel, et au cours de la phase P6 pour le modem en mode réponse, ces deux modems retournent à la phase P1.

## Revendications

1. Procédé de retour à une liaison normale (LS) après utilisation d'une liaison de secours (LRC) dans un système de transmission de données comportant deux telles liaisons entre deux équipements d'extrémité, la seconde de ces liaisons étant utilisée en cas de mauvais fonctionnement de la première, procédé comportant, parallèlement à la transmission sur la liaison de secours, une vérification préalable de la continuité de la liaison normale, caractérisée en ce que cette vérification préalable comporte une émission simultanée d'un signal de données par l'un des équipements d'extrémité, dit équipement d'extrémité initiateur de la procédure de vérification de continuité, sur la liaison normale et sur la liaison de secours, et une détection par l'autre équipement d'extrémité d'une éventuelle présence d'énergie sur la liaison normale, et ceci pour chaque support de transmission de la liaison normale si celle-ci comporte des supports distincts pour chaque sens de transmission.

2. Procédé selon la revendication 1, caractérisé en ce qu'il comporte, une fois établie la continuité de la liaison normale, par détection de présence d'énergie sur cette liaison, au cours d'une première étape, une deuxième étape de vérification de la bonne qualité de la transmission sur cette liaison, sans libérer la liaison de secours, et à l'initiative de l'un des équipements d'extrémité, dit équipement d'extrémité initiateur de la procédure de vérification de qualité.

3. Procédé selon la revendication 2, caractérisé en ce qu'il comporte, en cas de non vérification de bonne qualité de la transmission sur la liaison normale au cours de la deuxième étape, un retour à la première étape, avec transmission sur la liaison de secours non libérée, émission simultanée d'un signal de données par l'équipement d'extrémité initiateur de la procédure de vérification de continuité, sur la liaison normale et sur la liaison de secours, et détection par l'autre équipement d'extrémité d'une éventuelle présence d'énergie sur la liaison normale, seulement à l'expiration d'un délai de temporisation.

4. Procédé selon l'une des revendications 1 à 3, caractérisé en ce qu'il comporte parallèlement à la détection du mauvais fonctionnement de la liaison normale, une détection de la nature du défaut de transmission, à savoir interruption ou dégradation de la qualité de la transmission, affectant cette liaison.

5. Procédé selon la revendication 4, caractérisé en ce que lorsque le défaut de transmission est une dégradation de la qualité de la transmission, la détection d'une éventuelle présence d'énergie sur la liaison normale se fait seulement à l'expiration d'un délai de temporisation.

6. Procédé selon l'une des revendications 2 à 5, caractérisé en ce que dans le cas d'une liaison normale ne comportant pas de supports distincts pour chaque sens de transmission, l'équipement d'extrémité initiateur de la procédure de vérification de qualité est l'équipement d'extrémité non initiateur de la procédure de vérification de continuité.

7. Procédé selon l'une des revendications 2 à 5, caractérisé en ce que dans le cas d'une liaison normale comportant des supports distincts pour chaque sens de transmission, la vérification de continuité s'effectuant en deux phases successives, l'équipement d'extrémité initiateur de la procédure de vérification de qualité est l'équipement d'extrémité non initiateur de la deuxième phase desdites phases successives.

8. Procédé selon l'une des revendications 6 et 7, caractérisé en ce qu'il comporte, une fois la continuité de la liaison normale établie, une étape intermédiaire d'information de l'équipement d'extrémité non initiateur de la procédure de vérification de qualité, du passage de la première à la deuxième étape, comportant une émission sur la liaison normale par l'équipement d'extrémité initiateur de la procédure de vérification de qualité, alors que l'équipement d'extrémité non initiateur de la procédure de vérification de qualité reçoit encore sur la liaison de secours.

9. Procédé selon la revendication 7, caractérisé en ce que, la liaison de secours étant une liaison par le réseau téléphonique commuté, et l'un des équipements d'extrémité, dit équipement d'extrémité en mode appel, ayant l'initiative d'établissement de la liaison de secours en cas de mauvais fonctionnement de la liaison normale, l'autre équipement d'extrémité étant dit équipement d'extrémité en mode réponse, l'équipement d'extrémité initiateur de la procédure de vérification de continuité est l'équipement d'extrémité en mode réponse et l'équipement d'extrémité initiateur de la procédure de vérification de qualité l'équipement d'extrémité en mode appel.

10. Procédé selon la revendication 8, caractérisé en ce que, la liaison de secours étant une liaison par le réseau téléphonique commuté, et l'un des équipements d'extrémité, dit équipement d'extrémité en mode appel, ayant l'initiative d'établissement de la liaison de secours en cas de mauvais fonctionnement de la liaison normale, l'autre équipement d'extrémité étant dit équipement d'extrémité en mode réponse, l'équipement d'extrémité initiateur de la procédure de vérification de qualité est l'équipement d'extrémité en mode appel, et l'équipement d'extrémité initiateur de la procédure de vérification de continuité est pour ladite première phase l'équipement d'extrémité en mode appel, et pour la deuxième phase desdites deux phases successives l'équipement d'extrémité en mode réponse.

11. Système de transmission de données pour la mise en oeuvre du procédé selon l'une des revendications 1 à 10, comportant deux liaison (LS, LRC) entre deux équipements d'extrémité, la seconde de ces liaisons étant utilisée en cas de mauvais fonctionnement de la première, caractérisé en ce qu'il comporte, dans chacun des équipements d'extrémité, comportant lui-même un dispositif (1) de traitement de données émises et reçues par cet équipement d'extrémité :
- un circuit d'aiguillage (2′) assurant la connexion des accès émission et réception du dispositif de traitement de données de cet équipement d'extrémité à ses accès en émission et en réception à la liaison normale et/ou à la liaison de secours,
- un détecteur d'énergie (3) connecté à l'accès de l'équipement d'extrémité en réception à la liaison normale,
- et un séquenceur (17) recevant les signaux provenant du détecteur d'énergie (3) et commandant en réponse le circuit d'aiguillage (2′) sur l'une ou l'autre des deux liaisons (LS, LRC).

12. Système selon la revendication 11, pour la mise en oeuvre du procédé selon l'une des revendications 2 à 10, caractérisé en ce qu'il comporte en outre;
- un détecteur (1′) de réception satisfaisante ou non satisfaisante des signaux reçus par le dispositif (1) de traitement de données, les signaux de sortie de ce détecteur (1′) étant appliqués au séquenceur,
- un interrupteur (19) commandé en fermeture tant que la liaison de secours ne doit pas être libérée, et en ouverture dans le cas contraire, et commandé par ledit séquenceur.

## Patentansprüche

1. Verfahren zur Rück-Umschaltung auf eine normale Verbindungsstrecke (LS) nach Benutzung einer Hilfsverbindungsstrecke (LR) in einem Datenübertragungssystem, das zwei solcher Strekken zwischen zwei Endgeräten aufweist, von denen die zweite im Falle eines gestörten Betriebs der ersten benutzt wird, wobei das Verfahren parallel zur Übertragung über die Hilfsstrecke eine vorherige Überprüfung der Kontinuität der normalen Strekke einschließt, dadurch gekennzeichnet, daß bei der vorherigen Überprüfung ein Datensignal durch eines der Endgeräte, das die Kontinuitätsüberprüfungsprozedur auslöst, gleichzeitig über die normale und über die Hilfsstrecke ausgesendet wird, und das andere Endgerät ein eventuelles Vorhandensein von Energie auf der normalen Strecke erfaßt, und zwar für jeden Übertragungsträger der normalen Strecke, falls diese unterschiedliche Träger für jede Übertragungsrichtung aufweist.

2. Verfahren nach Anspruch 1, dadurch gekennzeichnet, daß auf die Ermittlung der Kontinuität der normalen Strecke durch Erfassung von Energie auf dieser Strecke in einer ersten Phase eine zweite Phase der Überprüfung der einwandfreien Qualität der Übertragung über diese Strecke folgt, ohne daß die Hilfsstrecke freigegeben würde, und zwar auf Initiative eines der Endgeräte, das die Prozedur zur Qualitätsüberprüfung auslöst.

3. Verfahren nach Anspruch 2, dadurch gekennzeichnet, daß eine Rückkehr zur ersten Phase mit Übertragung über die nicht freigegebene Hilfsstrecke und gleichzeitiger Aussendung eines Datensignals durch das die Kontinuitätstestprozedur auslösende Endgerät über die normale Strecke und über die Hilfsstrecke und mit Erfassung eines eventuellen Vorhandenseins von Energie auf der normalen Strecke durch das andere Endgerät erst nach Ablauf einer Zeitdauer erfolgt, sofern die ordentliche Übertragungsqualität auf der normalen Strecke während der zweiten Phase nicht festgestellt wurde.

4. Verfahren nach einem der Ansprüche 1 bis 3, dadurch gekennzeichnet, daß es parallel zur Erfassung des gestörten Betriebes der normalen Strecke eine Erkennung der Art des Übertragungsfehlers, nämlich die Unterbrechung oder nur die Verschlechterung der Qualität der Übertragung durchführt, die diese Strecke beeinträchtigt.

5. Verfahren nach Anspruch 4, dadurch gekennzeichnet, daß bei einer Übertragungsstörung in Form einer Verschlechterung der Qualität der Übertragung die Erfassung eines eventuellen Vorhandenseins von Energie auf der normalen Strecke erst nach Ablauf einer Zeitdauer erfolgt.

6. Verfahren nach einem der Ansprüche 2 bis 5, dadurch gekennzeichnet, daß das die Qualitätsüberprüfungsprozedur auslösende Endgerät nicht das die Kontinuitätsüberprüfungsprozedur auslösende Endgerät ist, wenn die normale Strecke keine nach Übertragungsrichtung getrennte Übertragungsträger besitzt.

7. Verfahren nach einem der Ansprüche 2 bis 5, dadurch gekennzeichnet, daß die Kontinuitätsüberprüfung in zwei aufeinanderfolgenden Phasen erfolgt, wobei das die Qualitätsüberprüfungsprozedur auslösende Endgerät nicht das die zweite Phase der aufeinanderfolgenden Phasen auslösende Endgerät ist, wenn die normale Strecke getrennte Übertragungsträger für jede Übertragungsrichtung besitzt.

8. Verfahren nach einem der Ansprüche 6 oder 7, dadurch gekennzeichnet, daß es nach Ermittlung der Kontinuität der normalen Strecke eine Zwischenphase zur Information des die Qualitätsüberprüfungsprozedur nicht auslösenden Endgerätes über den Übergang von der ersten zur zweiten Phase aufweist, die eine Aussendung über die normale Strecke durch das Qualitätsüberprüfungsprozedur auslösende Endgerät einschließt, während das die Qualitätsüberprüfungsprozedur nicht auslösende Endgerät noch über die Hilfsstrecke empfängt.

9. Verfahren nach Anspruch 7, dadurch gekennzeichnet, daß, wenn die Hilfsstrecke eine über das Fernsprechvermittlungsnetz geführte Strecke ist und eines der Endgeräte, das sich im Rufmodus befindet, die Initiative zum Aufbau der Hilfsstrecke im Falle eines gestörten Betriebes der normalen Strecke ergreift, während das andere Endgerät sich im Antwortmodus befindet, das Endgerät, das die Kontinuitätsüberprüfungsprozedur auslöst, das im Antwortmodus befindliche Gerät ist, während das Endgerät, das die Qualitätsüberprüfungsprozedur auslöst, das im Rufmodus befindliche Gerät ist.

10. Verfahren nach Anspruch 8, dadurch gekennzeichnet, daß, wenn die Hilfsstrecke eine über das Fernsprechvermittlungsnetz geführte Strecke ist und eines der Endgeräte, das sich im Rufmodus befindet, die Initiative zum Aufbau der Hilfsstrecke im Falle eines gestörten Betriebes der normalen Strecke ergreift, während das andere Endgerät sich im Antwortmodus befindet, das Endgerät, das die Qualitätsüberprüfungsprozedur auslöst, das im Rufmodus befindliche Endgerät ist, während das die Kontinuitätsüberprüfungsprozedur auslösende Endgerät in der ersten Phase das im Rufmodus befindliche Endgerät und in der zweiten Phase der aufeinanderfolgenden beiden Phasen das im Antwortmodus befindliche Endgerät ist.

11. Datenübertragungssystem zur Durchführung des Verfahrens gemäß einem der Ansprüche 1 bis 10, das zwei Strecken (LS, LRC) zwischen zwei Endgeräten aufweist, wobei die zweite Strecke im Falle eines gestörten Betriebs der ersten Strecke benutzt wird, dadurch gekennzeichnet, daß das System in jedem Endgerät, das selber eine Einrichtung (1) zur Verarbeitung der von diesem Endgerät gesendeten und empfangenen Daten aufweist, enthält:
- eine Weichenschaltung (2′), die die Verbindung der Sende- und Empfangsanschlüsse der Datenverarbeitungseinrichtung dieses Endgerätes mit seinen Sende- und Empfangsanschlüssen zur normalen Strecke und/oder zur Hilfsstrecke herstellt,
- einen Energiedetektor (3), der mit dem empfangsseitigen Anschluß des Endgerätes mit der normalen Strecke verbunden ist; und
- eine Folgesteuerung (17), die die vom Energiedetektor (3) kommenden Signale empfängt und als Antwort darauf die Weichenschaltung (2′) auf eine der beiden Strecken (LS, LRC) einstellt.

12. System nach Anspruch 11 zur Durchführung des Verfahrens gemäß einem der Ansprüche 2 bis 10, dadurch gekennzeichnet, daß es weiter aufweist:
- einen Detektor (1′) zum Feststellen des befriedigenden oder nicht befriedigenden Empfangs der von der Datenverarbeitungsvorrichtung (1) empfangenen Signale, wobei die Ausgangssignale dieses Detektors (1′) an die Weichenschaltung angelegt werden, und
- einen Unterbrecher (19), der solange in der Schließstellung gehalten wird, wie die Hilfsstrecke nicht freigegeben werden soll, und der im entgegengesetzten Falle in der Öffnungsstellung gehalten wird, wobei der Unterbrecher von der Weichenschaltung betätigt wird.

## Claims

1. Method of returning to a normal link (LS) after using a standby link (LRC) in a data communication system comprising two such links between two terminal equipments, the second link being used in the event of malfunctioning of the first, said method comprising, in parallel with transmission on the standby link, preliminary verification of the continuity of the normal link, characterised in that said preliminary verification involves simultaneous transmission of a data signal by one terminal equipment, referred to hereinafter as the terminal equipment initiating the continuity verification procedure, on the normal link and on the standby link, and detection by the other terminal equipment of the presence or absence of power on the normal link, for each transmission medium of the normal link if the latter comprises separate media for each transmission direction.

2. Method according to claim 1 characterised in that, when continuity of the normal link is established by sensing the presence of power on said link during a first stage, a second stage verifies the quality of transmission on said link without clearing down the standby link and at the initiative of one terminal equipment, referred to hereinafter as the terminal equipment initiating the quality verification procedure.

3. Method according to claim 2 characterised in that, if good transmission quality on the normal link is not verified during the second stage, there is a return to the first stage with transmission on the standby link which has not been cleared down simultaneously of a data signal by the terminal equipment initiating the continuity verification procedure on the normal link and on the standby link and detection by the other terminal equipment of the presence or absence of power on the normal link, only after a time-delay.

4. Method according to any one of claims 1 to 3 characterised in that it comprises in parallel with the detection of malfunctioning of the normal link detection of the nature of the transmission fault: either interruption or deterioration of transmission quality on said link.

5. Method according to claim 4 characterised in that, in the event that the transmission fault is a deterioration of transmission quality, the presence of power on the normal link is sensed only after a time-delay.

6. Method according to any one of claims 2 to 5 characterised in that, in the case of a normal link which does not include separate media for each transmission direction, the terminal equipment initiating the quality verification procedure is the terminal equipment which does not initiate the continuity verification procedure.

7. Method according to any one of claims 2 to 5 characterised in that, in the case of a normal link comprising separate transmission media for each transmission direction, the continuity verification being carried out in two successive phases, the terminal equipment initiating the quality verification procedure is the terminal equipment which does not initiate the second of said successive phases.

8. Method according to claim 6 or claim 7 characterised in that, when continuity of the normal link has been established, an intermediate stage in which the terminal equipment which does not initiate the quality verification procedure is advised of the change from the first stage to the second stage, including transmission on the normal link by the terminal equipment initiating the quality verification procedure while the terminal equipment that does not initiate the quality of verification procedure is still receiving on the standby link.

9. Method according to claim 7 characterised in that, in the case where the standby link is a public switched telephone network link and one of the terminal equipments, referred to hereinafter as the call mode terminal equipment, having the initiative for setting up the standby link in the case of malfunctioning of the normal link, the other terminal equipment being referred to hereinafter as the receive mode terminal equipment, the terminal equipment initiating the continuity verification procedure is the receive mode terminal equipment and the terminal equipment initiating the quality verification procedure is the call mode terminal equipment.

10. Method according to claim 8 characterised in that, in the case where the standby link is a public switched telephone network link and one of the terminal equipments, referred to hereinafter as the call mode terminal equipment, having the initiative for setting up the standby link in the case of malfunctioning of the normal link, the other terminal equipment being referred to hereinafter as the receive mode terminal equipment, the terminal equipment initiating the quality verification procedure is the call mode terminal equipment and the terminal equipment initiating the continuity verification procedure is in said first phase the call mode terminal equipment and in said second phase of two said successive phases the receive mode terminal equipment.

11. Data communication system for implementing the method according to any one of claims 1 to 10 comprising two links (LS, LRC) between two terminal equipments, the second link being used in the event of malfunctioning of the first, characterised in that it comprises in each of the terminal equipments, which includes a device (1) for processing data transmitted and received by said terminal equipment:
- a switching circuit (2′) adapted to connect transmit and receive ports of the data processing device of said terminal equipment to its transmit and receive ports on the normal link and/or the standby link,
- a power sensor (3) connected to the terminal equipment normal link receive port, and
- a sequencer (17) receiving the signals from the power sensor (3) and in response thereto commanding the switching circuit (2′) to one or the other of the two links (LS, LRC).

12. System according to claim 11 for implementing the method according to any one of claims 2 to 10 characterised in that it further comprises:
- a detector (1′) adapted to determine whether signals received by the data processing device (1) are received satisfactorily or not, the output signals of this detector (1′) being fed to the sequencer, and
- a switch (19) controlled by said sequencer and closed when the standby link must not be cleared down and opened otherwise.
